# EUROPÄISCHE PATENTSCHRIFT

(11) **EP 1 362 996 B1**
(45) Veröffentlichungstag und Bekanntmachung des Hinweises auf die Patenterteilung: **15.12.2004**
(21) Anmeldenummer: 03450043.9
(22) Anmeldetag: 18.02.2003
(51) Int. Cl.: F02B 23/10, F02F 3/26, F02F 1/42

(54) **Kolben für eine direkteinspritzende, fremdgezündete Brennkraftmaschine**
Piston for a direct injected spark ignition combustion engine
Piston pour un moteur à combustion interne à injection directe, à allumage par etincelle

(30) Priorität: 07.05.2002 AT 28802 U
(43) Veröffentlichungstag der Anmeldung: 19.11.2003
(73) Patentinhaber: AVL List GmbH, 8020 Graz (AT)
(72) Erfinder: Kapus, Paul, Dr., 8111 Judendorf (AT)
(74) Vertreter: Babeluk, Michael, Dipl.-Ing.

(56) Entgegenhaltungen:
- EP-A- 0 997 622
- WO-A-99/58830
- DE-A- 19 820 085
- US-A- 5 327 864
- US-A- 6 158 410

## Beschreibung

Die Erfindung betrifft einen Kolben für eine direkteinspritzende, fremdgezündete Brennkraftmaschine mit einem Zylinderkopf mit einer im Zylinder zentral angeordneten Zündeinrichtung und einem seitlich angeordneten Injektor zur direkten Kraftstoffeinspritzung, mit einer eine Kolbenmulde im Bereich der Kolbenachse aufweisenden brennraumseitigen Kolbenoberfläche, welche Ausnehmungen für den Freigang von zwei Einlassventilen auf einer Einlassseite und zwei Auslassventilen auf einer Auslassseite aufweist, wobei die Kolbenmulde im Bereich der Auslassseite eine Rampe aufweist, und wobei zwischen einem Muldenboden und einer durch eine Rampeninnenfläche gebildeten Strömungsleitfläche ein erster Krümmungsradius ausgebildet ist, wobei die Kolbenmulde auf der Einlassseite in Richtung der Kolbenoberfläche zu einem zwischen den Ausnehmungen der Einlassventile liegenden seitlichen Einspritzbereich ausläuft.

Aus der Veröffentlichung Nr. 01A5017 "CFD Support In The Development Of A 2.0L Direct Injection Gasoline Engine", A. Bianchi d'Espinosa, M.G. Lisbona, D. Andriesse, 4. International Seminar "High Performance Engines" 18.-19. Oktober 2001, Stressa, Italien, ist ein Kolben für eine direkteinspritzende fremdgezündete Brennkraftmaschine bekannt, welcher eine Kolbenmulde aufweist, die auf der Auslassseite als Rampe geformt ist. Die Kolbenoberfläche dieses Kolbens ist im Wesentlichen eben ausgebildet und weist nahe dem Kolbenrand angeordnete Freistellungen für geneigte Ein- und Auslassventile auf. Der Kolben dient zum Einsatz bei einer Brennkraftmaschine mit einer seitlichen Einspritzeinrichtung und einer mittigen Zündkerze. Die Einspritzung des Kraftstoffes erfolgt in die Kofbenmulde. Der Kraftstoff wird durch die Rampe - bei aufwärtsgehendem Kolben - aber zu einem großen Teil nicht zur Zündkerze, sondern zum auslassseitigen Zylinderrand gelenkt, wodurch im Bereich der Zündkerze nur eine geringe Schichtladung einsteht. Dieser Überschwappeffekt des Kraftstoffes aus der Kolbenmulde heraus hat den Nachteil, dass insbesondere bei Anwendung in Hochleistungsmotoren, die Verbrennung nur unvollkommen abläuft, dass es zu einem ölverdünnend wirkenden Kraftstoffwandfilm kommt und dass relativ hohe HCund CO-Emissionen auftreten.

Die DE 198 20 085 A1 offenbart einen Kolben für eine direkteinspritzende Brennkraftmaschine mit zwei Einlass- und zwei Auslassventilen pro Zylinder. Für den Freigang der Hubventile weist der Kolben Ausnehmungen auf der Einlass- und der Auslassseite auf. Der Kolben weist weiters drei Kolbenmulden auf, wobei sich eine zentrale Kolbenmulde im Wesentlichen in Richtung der senkrechten Projektion eines aus dem Einspritzventil austretenden Einspritzstrahles auf die Stirnfläche des Kolbens erstreckt. Die beiden anderen Brennraummulden sind seitlich benachbart zu der zentralen Brennraummulde angeordnet, wobei zwischen den Brennraummulden Y-förmig angeordnete Stege ausgebildet sind, wobei der Scheitelpunkt der Stege erhöht am Kolben angeordnet ist. In diesem Bereich geht der Muldenboden der zentralen Kolbenmulde in eine auf der Auslassseite angeordnete Rampe über, wobei zwischen dem Muldenboden und der Rampeninnenfläche ein Krümmungsradius vorgesehen ist. Die zentrale Kolbenmulde läuft auf der Einlassseite zu einem zwischen den Ausnehmungen der Einlassventile liegenden seitlichen Einspritzbereich aus. Da die Stege zwischen den einzelnen Kolbenmulden sehr flach verlaufen, kommt es ebenfalls zu einem Überschwappeffekt des Kraftstoffes aus der Kolbenmulde heraus, was das Auftreten einer unvollkommenen Verbrennung begünstigt.

Aus der EP 0 997 622 A1 ist eine direkteinspritzende Brennkraftmaschine mit zwei Einlass- und zwei Auslassventilen, sowie einem auf der Einlassseite angeordneten Einspritzventil pro Zylinder bekannt. Der Kolben weist eine Kolbenmulde mit einer auf der Einlassseite angeordneten Rampe auf. Ausnehmungen für den Freigang der Hubventile sind keine vorgesehen. Zwischen dem Muldenboden und der Rampeninnenfläche ist ein Krümmungsradius ausgebildet. Die Kraftstoffeinspritzung erfolgt bei dieser bekannten Brennkraftmaschine nicht in Richtung der Rampe, sondern von dieser weg. Dabei besteht die Gefahr, dass ein Teil des Kraftstoffes die Zylinderwand benetzt und somit für die Verbrennung nicht mehr zur Verfügung steht. Dies wirkt sich auch hier nachteilig auf die Emissionen und auf die Qualität des Schmieröles aus.

Aufgabe der Erfindung ist es, diese Nachteile zu vermeiden und einen für Hochleistungsmotoren geeigneten schichtfähigen Kolben zu entwickeln, mit welchem sich eine deutliche Absenkung der NOx-Emissionen ohne Verbrauchsnachteile erzielen lässt.

Erfindungsgemäß wird dies dadurch erreicht, dass zwischen Strömungsleitfläche und Kolbenoberfläche ein zweiter Krümmungsradius ausgebildet ist, wobei die Profillinie der Kolbenmulde zwischen erstem und zweitem Radius einen geraden Übergangsbereich aufweist, dass die Kolbenmulde einen im Wesentlichen tropfenförmigen Grundriss aufweist, und dass die Seitenflächen der Kolbenmulde im Wesentlichen einem vom Einspritzbereich ausgehenden Einspritzstrahl nachgebildet sind. Dadurch wird der in die Kolbenmulde eintretende Kraftstoff gezielt zur Zündkerze gelenkt, wobei durch den im Profil geraden Übergangsbereich zwischen den Krümmungsradien der beim Stand der Technik zu beobachtende Überschwappeffekt des aus der Kolbenmulde austretenden Kraftstoffes vermieden wird. Dabei ist vorgesehen, dass der erste Krümmungsradius größer oder gleich 5 mm ist, wobei vorzugsweise der zweite Krümmungsradius etwa 1 bis 1,5 mm beträgt. Der Überschwappeffekt kann wirksam vermieden werden, wenn die Strömungsleitfläche im Übergangsbereich zur Kolbenachse unter einen Winkel zwischen 0° und etwä 20° geneigt ist, wobei vorzugsweise sich der Übergängsbereich über eine Höhe von mindestens 0,5 mm erstreckt.

In einer besonders bevorzugten Ausführungsvariante der Erfindung ist vorgesehen, dass der Einspritzstrahl einen Strahlkegel mit einem Öffnungswinkel von etwa 60 bis 75° an der Strahlwurzel aufweist. Die Tropfenform der Kolbenmulde gewährleistet, dass es zu keiner oder wenig Anlagerung von Kraftstoff an den Seitenflächen der Kolbenmulde kommt, was sich nachteilig auf den Kraftstoffabbrand auswirken würde. Dabei ist es vorteilhaft, wenn der Öffnungswinkel der Seitenfläche in Strömungsrichtung des eingespritzten Kraftstoffes von einem maximalen Wert stetig abnimmt, wobei vorzugsweise der maximale Öffnungswinkel der Seitenflächen im Anschluss an den Einspritzbereich etwa dem Öffnungswinkel des Strahlkegels an der Strahlwurzel entspricht. Der von der Einspritzeinrichtung im Bereich der Zylinderwand eingespritzte Kraftstoff trifft auf den Muldenboden auf, und wird über die Rampeninnenfläche zur Zündeinrichtung geleitet, wo eine deutlich ausgebildete Schichtladung entsteht. Im Grundriss betrachtet, sollte der Abstand zwischen der Zündquelle und der Rampe mindestens den Zündkerzenhalbmesser betragen, wobei vorzugsweise der Abstand zwischen Rampe und dem dem Einspritzbereich entferntesten Kolbenrand auf der Auslassseite zwischen 20% und 40%, vorzugsweise zwischen 30% und 40% des Kolbendurchmessers beträgt. Bei dachförmig gestaltetem Zylinderkopfboden ist es zur Erzielung eines hohen Verdichtungsverhältnisses vorteilhaft, wenn die Kolbenoberfläche und/oder die Ausnehmungen für die Einlass- und Auslassventile im Wesentlichen dachförmig ausgebildet sind, wobei vorzugsweise im Übergang zwischen den beiden Dachflächen eine vorzugsweise normal auf die Kolbenachse stehende, zumindest teilweise ebene Giebelfläche ausgebildet ist. Besonders gute Ergebnisse lassen sich erzielen, wenn der Öffnungswinkel der Seitenflächen in einem Bereich von Verschneidungskanten der Ausnehmungen für die Einlassventile mit der Giebelfläche gemessen, etwa 20° bis 45°, vorzugsweise etwa 35°, beträgt. Eine optimale Einleitung des Kraftstoffstrahles in den Zylinder und die Kolbenmulde lässt sich dadurch erreichen, dass die Kolbenoberfläche im Einspritzbereich eine Injektorfreistellung aufweist, wobei vorzugsweise die Kolbenmulde in die Injektorfreistellung ausläuft.

Die Erfindung wird im Folgenden anhand der Figuren näher erläutert. Es zeigen
- Fig. 1: den erfindungsgemäßen Kolben in einer Schrägansicht,
- Fig. 2: den Kolben in einem Grundriss,
- Fig. 3: den Kolben in einem Schnitt gemäß der Linie III-III in Fig. 2,
- Fig. 4: das Detail IV aus Fig. 3,
- Fig. 5, 6 und 7: einen Zylinder einer Brennkraftmaschine mit dem erfindungsgemäßen Kolben in einer ersten Anwendungsvariante in drei verschiedenen Kolbenstellungen,
- Fig. 8: die Einspritzereignisse der ersten Anwendungsvariante über dem Kurbelwinkel aufgetragen,
- Fig. 9, 10 und 11: einen Zylinder einer Brennkraftmaschine mit einem erfindungemäßen Kolben in einer zweiten Anwendungsvariante in drei verschiedenen Kolbenstellungen,
- Fig. 12: die Einspritzereignisse dieser Anwendungsvariante über dem Kurbelwinkel aufgetragen,
- Fig. 13, 14 und 15: einen Zylinder einer Brennkraftmaschine mit dem erfindungsgemäßen Kolben in einer dritten Anwendungsvariante in drei verschiedenen Kolbenstellungen,
- Fig. 16: die Einspritzereignisse dieser Anwendungsvariante über dem Kurbelwinkel aufgetragen,
- Fig. 17, 18 und 19: einen Zylinder einer Brennkraftmaschine mit dem erfindungsgemäßen Kolben in einer vierten Anwendungsvariante in drei verschiedenen Kolbenstellungen,
- Fig. 20: die Einspritzereignisse dieser Anwendungsvariante über dem Kurbelwinkel aufgetragen,
- Fig. 21, 22 und 23: einen Zylinder einer Brennkraftmaschine mit dem erfindungemäßen Kolben in einer fünften Anwendungsvariante in drei verschiedenen Kolbenstellungen,
- Fig. 24: die Einspritzereignisse dieser Anwendungsvariante über dem Kurbelwinkel aufgetragen,
- Fig. 25 und 26: einen Zylinder einer Brennkraftmaschine mit einem erfindungsgemäßen Kolben in einer weiteren Anwendungsvariante in zwei verschiedenen Kolbenstellungen und
- Fig. 27: die Einspritzereignisse dieser Anwendungsvariante über dem Kurbelwinkel aufgetragen.

Funktionsgleiche Teile sind in den Figuren mit gleichen Bezugszeichen versehen.

Der Kolben 2 weist eine Kolbenoberfläche 4 auf, in welche eine etwa zentrale Kolbenmulde 12 eingeformt ist. Die Kolbenoberfläche 4 weist weiters auf der Einlassseite 21 Ausnehmungen 22 für den Freigang von Einlassventilen 7 und auf der Auslassseite 23 Ausnehmungen 24 für den Freigang von nicht weiter dargestellten Auslassventilen auf. Die Ausnehmungen 22, 24 laufen zum Kolbenrand 11 aus und verschneiden sich mit der Kolbenmulde 12, so dass die Kolbenmulde 12 etwa mittig zwischen den Ausnehmungen 22, 24 angeordnet ist. Die Oberfläche 4 und/oder die Ausnehmungen 22, 24 sind - zumindest teilweise - dachförmig geformt und einem dachförmigen Zylinderkopfboden 19 angepasst. Zwischen den Dachflächen 25, 26 ist eine im Wesentlichen ebene Giebelfläche 27 normal auf die Kolbenachse 28 ausgebildet.

Die Kolbenmulde 12 ist - im Grundriss betrachtet - tropfenförmig gestaltet und zumindest im Bereich der Seitenflächen 28 einem von einem Einspritzbereich 29 ausgehenden Einspritzstrahl nachempfunden, welcher an der Strahlwurzel einen Einspritzstrahlkegel von etwa 60° bis 75° aufweist. Der Öffnungswinkel β der Seitenflächen 28 beträgt im Bereich von Verschneidungskanten 30 zwischen den Ausnehmungen 22 und der Giebelfläche 27 im Ausführungsbeispiel etwa 35°. Dadurch wird gewährleistet, dass der Strahl die Seitenflächen 28 der Kolbenmulde 12 nicht benetzt.

In Richtung der Einlassseite 21 läuft die Kolbenmulde 12 zum Einspritzbereich 29 der Oberfläche 4 des Kolbens 2 aus.

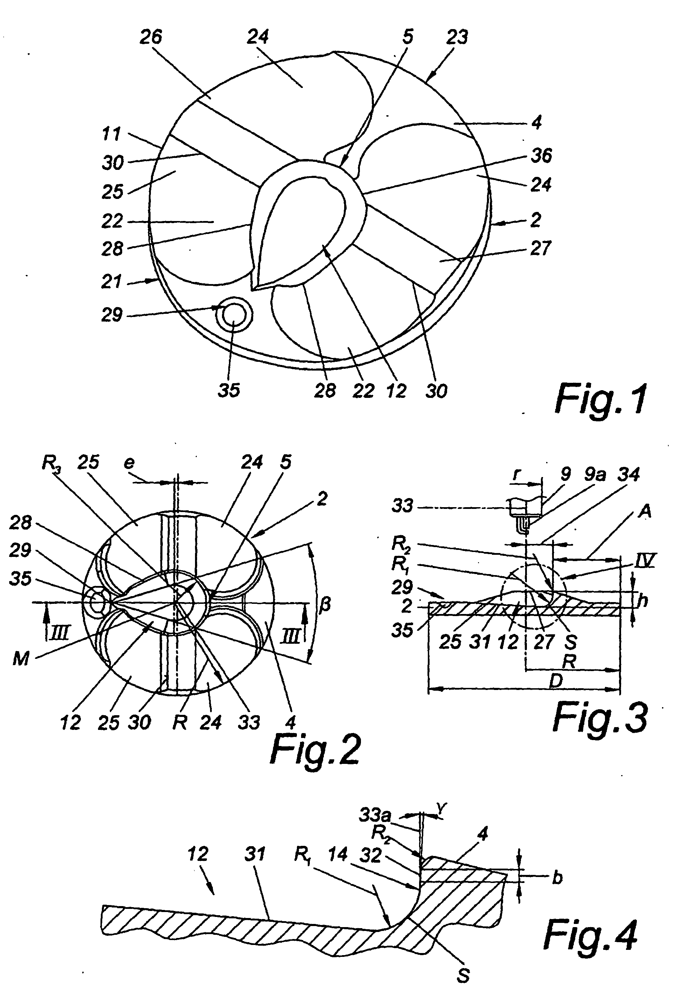

Auf der Auslassseite 23 weist die Kolbenmulde 12 eine Rampe 5 auf. Zwischen dem Muldenboden 31 und der durch die Rampeninnenseite gebildeten Strömungsleitfläche 14 ist ein erster Krümmungsradius R₁ eingeformt, welcher mindestens 5 mm beträgt. Zwischen der Strömungsleitfläche 14 und der Oberfläche 4 des Kolbens 2 ist ein zweiter Krümmungsradius R₂ von etwa 1 bis 1,5 mm vorgesehen. Zwischen dem ersten Krümmungsradius R₁ und dem zweiten Krümmungsradius R₂ weist die Profillinie s der Kolbenmulde 12 einen geraden Übergangsbereich 32 mit einer Höhe b von mindestens 0,5 mm auf, wie aus Fig. 3 und 4 hervorgeht. Der Übergangsbereich 32 kann zu einer Kolbenachsenparallelen 33a um einen Winkel γ im Ausmaß von 0 bis 20° geneigt sein.

Im Grundriss gesehen, ist der Rand 36 der Kolbenmulde 12 auf der Auslassseite 23 kreissegmentförmig und weist einen Radius R₃ auf, welcher etwa zwischen 30 bis 40 % des Kolbenradius R entspricht. Der Mittelpunkt M dieses Radius R₃ kann mit einer geringen Exzentrizität e bezüglich der Kolbenachse 33 ausgebildet sein. Die in Fig. 3 angedeutete Zündquelle 9a ist etwa im Bereich der Kolbenachse 33 angeordnet. Der Abstand 34 zwischen der Rampe 5 und der Zündquelle 9a der Zündeinrichtung 9 beträgt mindestens dem Halbmesser r der Zündeinrichtung 9.

Im Einspritzbereich 29 weist der Kolben 2 im Ausführungsbeispiel eine Injektorfreistellung 35 für den Freigang des Injektors 10 auf.

Die Höhe h zwischen tiefster Stelle des Kolbenbodens 31 und der höchsten Stelle der Giebelfläche 27 bzw. der Rampe 5 beträgt im Ausführungsbeispiel etwa 15 bis 20 % des Kolbenradius R, mindestens aber etwa 8 mm.

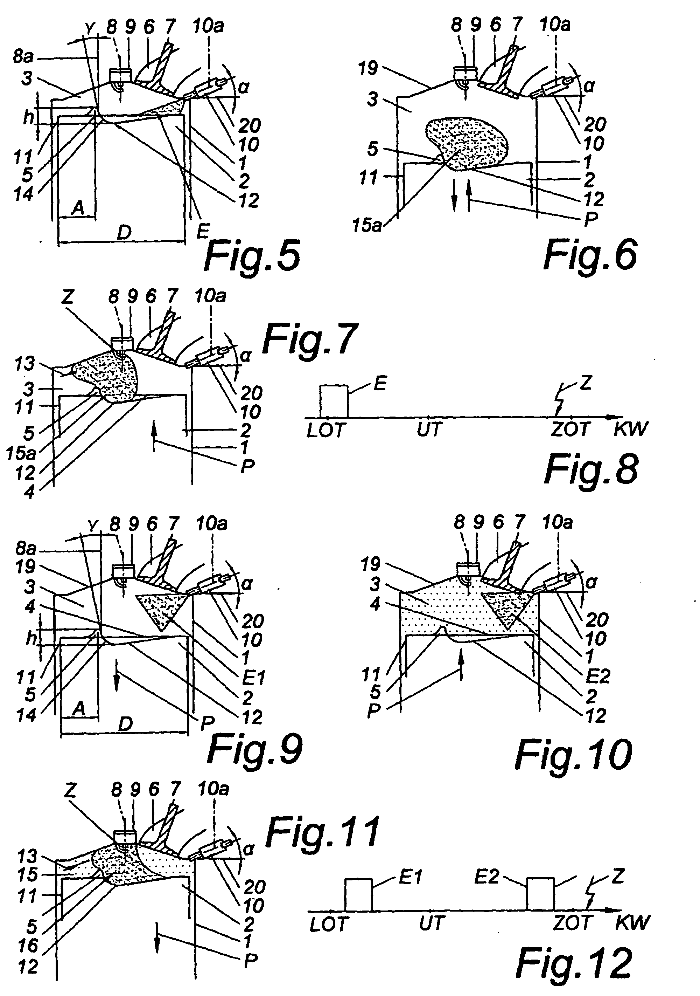

Die Fig. 5 bis 27 zeigen schematisch verschiedene Anwendungsbeispiele des Kolbens 2 für Zylinder 1 von Hochleistungs-Brennkraftmaschinen. Die Brennkraftmaschine weist pro Zylinder 1 mindestens einen eine Walzenströmung erzeugenden Einlasskanal 6 auf, welcher durch ein Einlassventil 7 gesteuert wird. Im Bereich der Zylinderachse 8 ist eine Zündeinrichtung 9 angeordnet. Am Rand des Brennraumes 3 mündet einlassseitig ein flach eingebauter Injektor 10 zur direkten Kraftstoffeinspritzung in den Brennraum 3 ein. Die Strahlachse 10a des Injektors 10 spannt mit der Zylinderkopfebene 20 einen Winkel α von etwa 20° bis 40° auf.

Der über den seitlich in einem Zylinderkopfboden 19 angeordneten Injektor 10 in die Kolbenmulde 12 eingespritzte Kraftstoff trifft auf den Kolbenboden 31 und wird über die Strömungsleitfläche 14 in Richtung einer im Zylinderkopfboden 19 angeordneten Zündeinrichtung 9 gelenkt. Im Bereich um die Zündeinrichtung 9 kommt es dadurch zu einer ausgeprägten Ladungsschichtung. In Kombination mit einem späten Auslassschluss zwischen 5 bis 40° nach dem oberen Totpunkt LOT des Ladungswechsels zur Durchführung einer internen Abgasrückführung kann insbesondere bei Hochleistungsmotoren eine deutliche Absenkung der NOx-Emissionen ohne Verbrauchsnachteile erreicht werden. Zündwinkel von etwa 20°-30° Kurbelwinkel KW nach dem oberen Totpunkt ZOT haben sich dabei als besonders günstig erwiesen.

Die Rampe 5 ist in der dem Injektor 10 abgewandten Hälfte des Kolbens 2 angeordnet, wobei der Abstand A zwischen dem Kolbenrand 11 und der Rampe 5 etwa 20% bis 40%, vorzugsweise zwischen 30% und 40% des Kolbendurchmessers D beträgt. Im Bereich der Rampe 5 ist einlassseitig eine Kolbenmulde 12 in der Oberfläche 4 des Kolbens 2 ausgebildet. Ein derartiger Kolben 2 kann auch im geschichteten Leerlaufbetrieb mit Einspritzung des Kraftstoffes in der Kompressionsphase, insbesondere unmittelbar vor dem oberen Totpunkt ZOT der Zündung, verwendet werden. Eine bessere Leerlaufstabilität lässt sich aber erreichen, wenn während der Leerlaufphase im Bereich des oberen Totpunktes LOT des Ladungswechsels und/oder während des Ansaugtaktes der Kraftstoff in den Zylinder eingespritzt wird.

In dem in den Fig. 5 bis 8 dargestellten ersten Anwendungsbeispiel des Kolbens 2 wird in der Phase des Leerlaufes und gegebenenfalls auch bei niedriger Teillast bis zur Rußgrenze der Kraftstoff einmalig im Bereich des oberen Totpunktes LOT des Ladungswechsels (siehe Fig. 8) in den Zylinder 1 auf den Kolbenboden 31 des Kolbens 3 eingespritzt, wie aus Fig. 5 hervorgeht. Dieser Kraftstoff dampft bis zum oberen Totpunkt ZOT der Zündung Z ab und führt zu einer fetten Gemischwolke 15a an der Zündeinrichtung 9. Durch die frühe einmalige Einspritzung E wird ein Großteil der Einspritzmenge annähernd homogen im Brennraum 3 verteilt. Dadurch kann ein Betrieb etwa mit einem 3-Wege-Katalysator bei einem Luft/Kraftstoffverhältnis λ=1 durchgeführt werden.

Bei dem in den Fig. 9 bis 12 dargestellten zweiten Anwendungsbeispiel wird die erste Einspritzung E₁ kurz nach dem oberen Totpunkt LOT des Ladungswechsels durchgeführt. Der Beginn der ersten Einspritzung E₁ liegt im Bereich von etwa 20° bis 70° Kurbelwinkel KW nach dem oberen Totpunkt LOT des Ladungswechsels. Durch diese frühe Einspritzung wird ein homogenes Grundgemisch sichergestellt. Die zweite Einspritzung E₂ erfolgt etwa 60° bis 30° Kurbelwinkel KW vor dem oberen Totpunkt ZOT der Zündung Z, wodurch eine Ladungsschichtung erzeugt wird. Die Aufteilung der Kraftstoffmenge bei der ersten Einspritzung E₁ und der zweiten Einspritzung E₂ ist in etwa gleich. Die Zündung Z erfolgt relativ spät im Bereich von etwa 5° bis 15° Kurbelwinkel KW nach dem oberen Totpunkt ZOT der Zündung Z, um eine rasche Aufwärmung eines nicht weiter dargestellten Katalysators im Abgasstrang zu ermöglichen.

Fig. 9 zeigt die erste Einspritzung E₁ zur Erzeugung des homogenen Grundgemisches bei abwärts gehenden Kolben 2. Die Kolbenbewegung ist mit Pfeil P angedeutet. Wie in Fig. 12 dargestellt ist, erfolgt die zweite Einspritzung E₂ in das homogene Grundgemisch während des Kompressionstaktes im Bereich von etwa 60° bis 30° Kurbelwinkel KW vor dem oberen Totpunkt ZOT der Zündung Z. Das Kraftstoff-Luftgemisch wird an der Kolbenmulde 12 und an der Rampe 5 zur Zündeinrichtung 9 umgelenkt. Dadurch entsteht im Bereich der Zündeinrichtung 9 ein fettes zündfähiges Gemisch 16, wie in Fig. 11 dargestellt ist. Außerhalb dieser fetten Zone besteht ein homogenes, mageres Gemisch 15. Durch eine eventuelle Quetschflächenströmung 13 wird zusätzlich das fette Gemisch 16 zur Zündeinrichtung 9 geleitet.

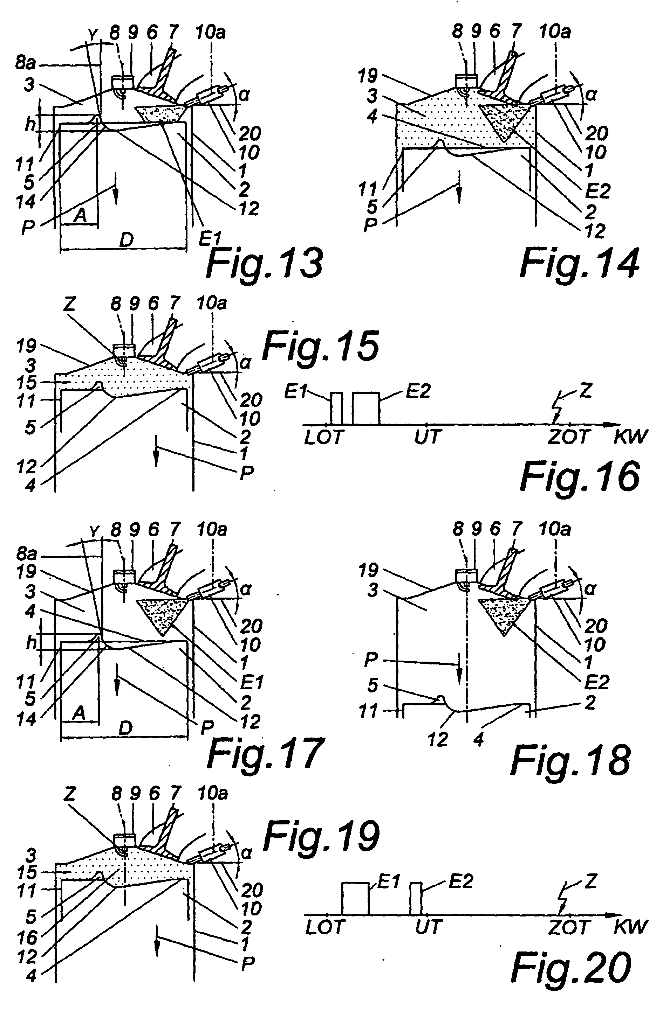

Die Fig. 13 bis 16 zeigen ein drittes Anwendungsbeispiel. Die in Fig. 13 dargestellte erste Einspritzung E₁ erfolgt während des Einlasstaktes relativ früh, und zwar etwa in einem Bereich von 0° bis 40° Kurbelwinkel KW nach dem oberen Totpunkt LOT des Ladungswechsels. Die Einspritzmenge ist dabei so gering, dass kein Ruß entseht. Die Einspritzdauer beträgt nur etwa 5° bis 10° Kurbetwinkel KW. Die in Fig. 14 angedeutete zweite Einspritzung E₂ erfolgt ebenfalls noch im Einlasstakt nach einer kurzen Pause zur ersten Einspritzung E₁. Diese kurze Pause wird im Wesentlichen durch die Wiederholzeit des Injektors 10 bestimmt. Da erste Einspritzung E₁ und zweite Einspritzung E₂ während des Einlasstaktes stattfinden, wird mit mittels des Kolbens 2 eine besonders gute Homogenisierung erreicht. Wie in Fig. 15 angedeutet ist, wird ein homogenes Gemisch 15 gezündet. Der Vorteil dieser Variante ist, dass eine Ölverdünnung vermieden werden kann.

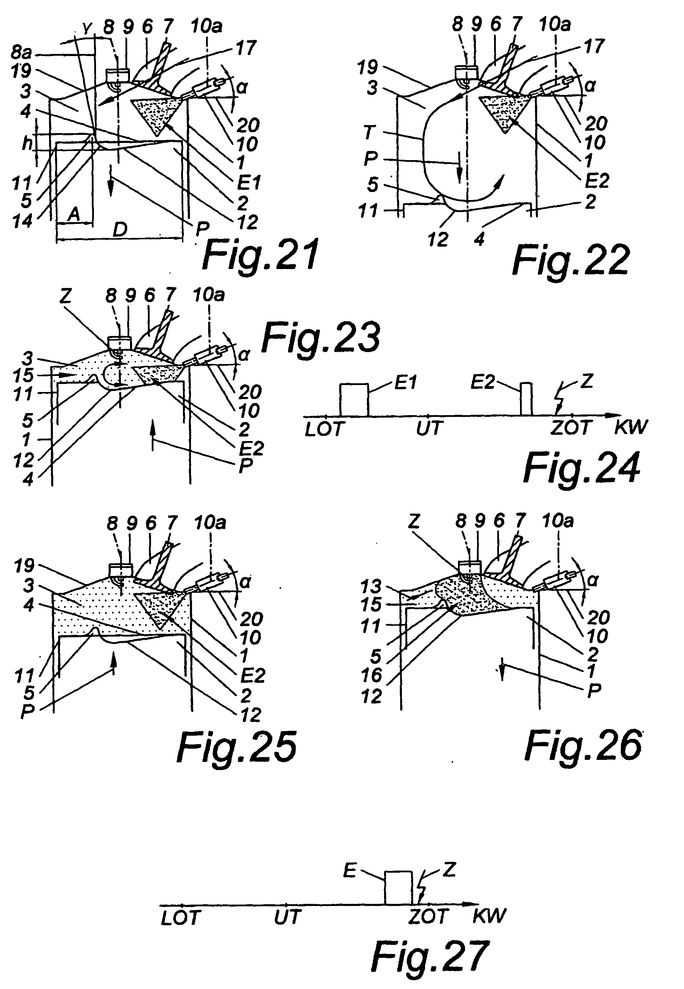

Eine Ölverdünnung kann auch bei der in den Fig. 17 bis 20 dargestellten vierten Anwendungsbeispiel vermieden werden. Die in Fig. 17 dargestellte erste Kraftstoffeinspritzung E₁ erfolgt auch hier während des Einlasstaktes (Fig. 17), wobei der Beginn der ersten Einspritzung E₁ in einem Bereich von etwa 20° bis 70° nach dem oberen Totpunkt LOT des Ladungswechsels liegt (Fig. 20). Die in Fig. 18 gezeigte zweite Einspritzung E₂ erfolgt mit kleinerer Kraftstoffmenge sehr spät während des Einlasstaktes über eine Dauer von etwa 5° bis 10° Kurbelwinkel KW, wobei das Ende der zweite Einspritzung E₂ im Bereich des unteren Totpunktes UT nach dem Ladungswechsel liegt. Dieses späte Ende der zweiten Einspritzung E₂ würde normalerweise bei flacher Injektorbaulage zu einer Ölverdünnung, also einem Durchspritzen des Kraftstoffstrahles zu Folge des hohen Strahlimpulses auf die auslassseitige Zylinderwand führen. Bei der hier erfolgenden kurzen Einspritzdauer reicht der Impuls für ein Durchspritzen zur auslassseitigen Zylinderwand aber nicht aus. Es kommt somit zu keiner Ölverdünnung. Bis zu der in Fig. 21 und 22 angedeuteten Zündung Z entsteht ein weitgehend homogenes Kraftstoff-Luftgemisch 15.

Die Fig. 21 bis 24 zeigen eine fünfte Anwendungsvariante, bei der die erste Einspritzung E₁ während des Einlasstaktes gleichsinnig mit der Einlassströmung 17 aus dem Einlasskanal 6 erfolgt. Der Einlasskanal 6 ist dabei tumbleerzeugend ausgebildet, so dass innerhalb des Zylinders 1 eine von der Einlassseite zur Auslassseite zum Kolben 2 verlaufende Tumbleströmung T erzeugt wird. Wie in der Fig. 21 und 22 dargestellt ist, ist der Einspritzimpuls der ersten Einspritzung E₁ gleichsinnig wie die Tumbleströmung T ausgebildet. Bis zur Zündung Z entsteht im Brennraum 3 ein homogenes Gemisch 15. Kurz vor der Zündung Z wird durch die zweite Einspritzung E₂ während des Kompressionstaktes Restgas von der Zündeinrichtung 9 weggeblasen und mittels der Rampe 5 des Kolbens 2 ein fettes Gemisch um die Zündeinrichtung 9 erzeugt. Die zweite Einspritzung E₂ erfolgt mit geringerer Kraftstoffmenge als die erste Einspritzung E₁.

Die Figuren 25 bis 27 zeigen eine sechste Anwendungsvariante, wobei eine einzige Einspritzung E während des Kompressionstaktes kurz vor dem oberen Totpunkt ZOT der Zündung Z, und zwar in einem Bereich zwischen etwa 60° bis 30° Kurbelwinkel vor dem oberen Totpunkt ZOT im Bereich des Leerlaufes bis zu einer Motordrehzahl von maximal etwa 1200/min und einem Drittel der Volllast durchgeführt wird. Dadurch bildet sich in der Kolbenmulde 12 im Bereich der Zündeinrichtung 9 eine stark ausgeprägte Schichtladung. Dies ermöglicht mageren Motorbetrieb mit niedrigem Kraftstoffverbrauch. Außerhalb des genannten Betriebsbereiches wird eine homogene Verbrennung mit früherer Kraftstoffelnspritzung angestrebt. Um ein zündfähiges Gemisch zu erhalten, ist es vorteilhaft, wenn die Zündung des Kraftstoff-Luftgemisches in einem Bereich von etwa 15° bis 30° vor dem oberen Totpunkt ZOT der Zündung Z erfolgt.

## Patentansprüche

1. Kolben (2) für eine direkteinspritzende, fremdgezündete Brennkraftmaschine mit einem Zylinderkopf mit einer im Zylinder (1) zentral angeordneten Zündeinrichtung (9) und einem seitlich angeordneten Injektor (10) zur direkten Kraftstoffeinspritzung, mit einer eine Kolbenmulde (12) im Bereich der Kolbenachse (33) aufweisenden brennraumseitigen Kolbenoberfläche (4), welche Ausnehmungen (22, 24) für den Freigang von zwei Einlassventilen (7) auf einer Einlassseite (21) und zwei Auslassventilen auf einer Auslassseite (23) aufweist, wobei die Kolbenmulde (12) im Bereich der Auslassseite (23) eine Rampe (5) aufweist, und wobei zwischen einem Muldenboden (31) und einer durch eine Rampeninnenfläche gebildeten Strömungsleitfläche (14) ein erster Krümmungsradius (R₁) ausgebildet ist, wobei die Kolbenmulde (12) auf der Einlassseite (21) in Richtung der Kolbenoberfläche (4) zu einem zwischen den Ausnehmungen (22) der Einlassventile (7) liegenden seitlichen Einspritzbereich (29) ausläuft, **dadurch gekennzeichnet, dass** zwischen Strömungsleitfläche (14) und Kolbenoberfläche (4) ein zweiter Krümmungsradius (R₂) ausgebildet ist, wobei die Profillinie (s) der Kolbenmulde (12) zwischen erstem und zweitem Radius (R₁, R₂) einen geraden Übergangsbereich (32) aufweist, dass die Kolbenmulde (12) einen im Wesentlichen tropfenförmigen Grundriss aufweist, und dass die Seitenflächen (28) der Kolbenmulde (12) im Wesentlichen einem vom Einspritzbereich (29) ausgehenden Einspritzstrahl nachgebildet sind.

2. Kolben (2) nach Anspruch 1, **dadurch gekennzeichnet, dass** die Kolbenoberfläche (4) und/oder die Ausnehmungen (22, 24) für die Einlass- und Auslassventile im Wesentlichen dachförmig ausgebildet sind, wobei vorzugsweise im Übergang zwischen den beiden Dachflächen (25, 26) eine vorzugsweise normal auf die Kolbenachse (33) stehende, zumindest teilweise ebene Giebelfläche (27) ausgebildet ist.

3. Kolben (2) nach Anspruch 1, **dadurch gekennzeichnet, dass** der Einspritzstrahl einen Strahlkegel mit einem Öffnungswinkel von etwa 60 bis 75° an der Strahlwurzel aufweist.

4. Kolben (2) nach Anspruch 3, **dadurch gekennzeichnet, dass** der Öffnungswinkel (β) der Seitenfläche (28) in Strömungsrichtung des eingespritzten Kraftstoffes von einem maximalen Wert stetig abnimmt.

5. Kolben nach Anspruch 3 oder 4, **dadurch gekennzeichnet, dass** der maximale Öffnungswinkel (β) der Seitenflächen (28) im Anschluss an den Einspritzbereich (29) etwa dem Öffnungswinkel des Strahlkegels an der Strahlwurzel entspricht.

6. Kolben (2) nach einem der Ansprüche 2 bis 5, **dadurch gekennzeichnet, dass** der Öffnungswinkel (β) der Seitenflächen (28) in einem Bereich von Verschneidungskanten (30) der Ausnehmungen (22) für die Einlassventile (7) mit der Giebelfläche (27) gemessen, etwa 20° bis 45°, vorzugsweise etwa 35°, beträgt.

7. Kolben (2) nach einem der Ansprüche 1 bis 6, **dadurch gekennzeichnet, dass** der erste Krümmungsradius (R₁) größer oder gleich 5 mm ist.

8. Kolben (2) nach einem der Ansprüche 1 bis 7, **dadurch gekennzeichnet, dass** der zweite Krümmungsradius (R₂) etwa 1 bis 1,5 mm beträgt.

9. Kolben (2) nach einem der Ansprüche 1 bis 8, **dadurch gekennzeichnet, dass** die Strömungsleitfläche (14) im Übergangsbereich (32) zur Kolbenachse (22) unter einen Winkel (γ) zwischen 0° und etwa 20° geneigt ist.

10. Kolben (2) nach einem der Ansprüche 1 bis 9, **dadurch gekennzeichnet, dass** sich der Übergangsbereich (32) über eine Höhe (b) von mindestens 0,5 mm erstreckt.

11. Kolben (2) nach einem der Ansprüche 1 bis 10, **dadurch gekennzeichnet, dass** die Kolbenoberfläche (4) im Einspritzbereich (29) eine Injektorfreistellung (35) aufweist, wobei vorzugsweise die Kolbenmulde (12) in die Injektorfreistellung (35) ausläuft.

12. Kolben (2) noch einem der Ansprüche 1 bis 11, **dadurch gekennzeichnet, dass** - im Grundriss betrachtet - der Abstand (34) zwischen Zündquelle (9a) und Rampe (5) mindestens den Zündkerzenhalbmesser (r) beträgt.

13. Kolben (2) nach einem der Ansprüche 1 bis 12, **dadurch gekennzeichnet, dass** der Abstand (A) zwischen Rampe (5) und dem dem Einspritzbereich (29) entferntesten Kolbenrand (11) auf der Auslassseite (23) zwischen 20% und 40%, vorzugsweise zwischen 30% und 40% des Kolbendurchmessers (D) beträgt.

14. Anwendung des Kolbens (2) nach einem der Ansprüche 1 bis 13, bei einer Brennkraftmaschine mit pro Arbeitstakt ein- oder mehrmaliger direkter Einspritzung des Kraftstoffes in den Zylinder.

## Claims

1. A piston (2) for a direct-injection, spark-ignited internal combustion engine with a cylinder head with an ignition device (9) centrally arranged in the cylinder (1) and a laterally arranged injector (10) for direct injection of fuel, with a piston surface (4) on the combustion chamber side, which surface comprises a piston trough (12) in the region of the piston axis (33) and recesses (22, 24) for the free run of two intake valves (7) on the intake side (21) and two exhaust valves on an exhaust side (23), with the piston trough (12) comprising a ramp (5) in the region of the exhaust side (23), and with a first radius of curvature (R₁) being formed between a trough floor (31) and a flow guide surface (14) formed by an interior surface of the ramp, with the piston trough (12) trailing out on the intake side (21) in the direction of the piston surface (4) into a lateral injection region (29) disposed between the recesses (22) and the intake valves (7), **characterized in that** a second radius of curvature (R₂) is formed between the flow guide surface (14) and the piston surface (4), with the profile line (s) of the piston trough (12) having a straight transitional region (32) between the first and second radius (R₁, R₂), that the piston trough (12) has a substantially drop-shaped layout, and that the lateral surfaces (28) of the piston trough (12) substantially emulate an injection jet starting out from the injection region (29).

2. A piston (2) according to claim 1, **characterized in that** the piston surface (4) and/or the recesses (22, 24) for the intake and exhaust valves are substantially provided with a roof-like configuration, with an at least partly plane gable surface (27) which preferably stands normal to the piston axis (33) being formed preferably in the transition between the two roof surfaces (25, 26).

3. A piston (2) according to claim 1, **characterized in that** the injection jet has a jet cone with a cone angle of approximately 60 to 75° at the jet root.

4. A piston (2) according to claim 3, **characterized in that** the cone angle (β) of the lateral surface (28) continually decreases from a maximum value in the direction of flow of the injected fuel.

5. A piston (2) according to claim 3 or 4, **characterized in that** the maximum cone angle (β) of the lateral surfaces (28) corresponds after the injection region (29) approximately to the cone angle of the jet cone at the jet root.

6. A piston (2) according to one of the claims 2 to 5, **characterized in that** the cone angle (β) of the lateral surfaces (28) is approximately 20° to 45°, preferably approximately 35°, as measured in a region of intersecting edges (30) of the recesses (22) for the intake valves (7) with the gable surface (27).

7. A piston (2) according to one of the claims 1 to 6, **characterized in that** the first radius of curvature (R₁) is larger than or equal to 5 mm.

8. A piston (2) according to one of the claims 1 to 7, **characterized in that** the second radius of curvature (R₂) is approximately 1 to 1.5 mm.

9. A piston (2) according to one of the claims 1 to 8, **characterized in that** the flow guide surface (14) is inclined under an angle (γ) of between 0° and approximately 20° in the transitional region (32) to the piston axis (22).

10. A piston (2) according to one of the claims 1 to 9, **characterized in that** the transitional region (32) extends over a height (b) of at least 0.5 mm.

11. A piston (2) according to one of the claims 1 to 10, **characterized in that** the piston surface (4) comprises in the injection region (29) an injector cavity (35), with the piston trough (12) preferably trailing out into the injector cavity (35).

12. A piston (2) according to one of the claims 1 to 11, **characterized in that** the distance (34) between the ignition source (9a) and the ramp (5), when seen in the layout, is at least half the radius (r) of the spark plug.

13. A piston (2) according to one of the claims 1 to 12, **characterized in that** the distance (A) between the ramp (5) and the piston edge (11) on the exhaust side (23) which is farthest from the injection region is between 20% and 40%, preferably between 30% and 40% of the piston diameter (D).

14. Application of the piston (2) according to one of the claims 1 to 13, in an internal combustion engine with single or multiple direct injection of fuel into the cylinder per work cycle.

## Revendications

1. Piston (2) pour un moteur à combustion interne à injection directe à allumage par étincelle, avec une culasse avec un dispositif d'allumage (9) disposé au centre dans le cylindre (1) et un injecteur disposé latéralement (10) pour l'infection directe de carburant, avec une surface de piston (4) présentant dans la région de l'axe du piston (33), du côté de la chambre de combustion une cuvette de piston (12) qui présente des évidements (22, 24) pour le passage libre de deux soupapes d'admission (7) sur un côté d'admission (21) et deux soupapes d'échappement sur un côté d'échappement (23), la cuvette de piston (12) présentant une rampe (5) dans la région du côté d'échappement (23), avec un premier rayon de courbure (R₁) formé entre un fond (31) de la cuvette et une surface de guidage d'écoulement (14) formée par une face intérieure de la rampe, la cuvette de piston (12) se terminant sur le côté d'admission (21) en direction de la surface de piston (4) par une région d'injection latérale (29) située entre les évidements (22) des soupapes d'admission (7),
**caractérisé en ce qu'**
un deuxième rayon de courbure (R₂) est formé entre la surface de guidage d'écoulement (14) et la surface de piston (4), la ligne du profil (s) de la cuvette de piston (12) présente une région de transition rectiligne (32) entre le premier et le deuxième rayons (R₁, R₂), la cuvette de piston (12) présente un contour en plan sensiblement en forme de goutte, et les faces latérales (28) de la cuvette de piston (12) épousent sensiblement un jet de carburant sortant de la région d'injection (29).

2. Piston (2) selon la revendication 1,
**caractérisé en ce que**
la surface de piston (4) et/ou les évidements (22, 24) pour les soupapes d'admission et d'échappement ont sensiblement la forme d'un toit, et une face de pignon (27) au moins partiellement plane, placée de préférence normalement à l'axe du piston (33), est formée de préférence dans la transition entre les deux versants de toit (25, 26).

3. Pignon (2) selon la revendication 1,
**caractérisé en ce que**
le jet d'injection présente un jet conique avec un angle d'ouverture d'environ 60 à 75° à la racine du jet.

4. Piston (2) selon la revendication 3,
**caractérisé en ce que**
l'angle d'ouverture (β) des faces latérales (28) diminue en continu à partir d'une valeur maximale dans la direction de l'écoulement du carburant injecté.

5. Piston selon la revendication 3 ou 4,
**caractérisé en ce que**
l'angle d'ouverture maximal (β) des faces latérales (28) à la jonction avec la région d'injection (29) correspond environ à l'angle d'ouverture du jet conique à la racine du jet.

6. Piston (2) selon l'une quelconque des revendications 2 à 5,
**caractérisé en ce que**
l'angle d'ouverture (β) des faces latérales (28) dans une région d'arêtes d'intersection (30) des évidements (22) pour les soupapes d'admission (7), mesuré par rapport à la face de pignon (27), vaut environ 20° à 45°, de préférence environ 35°.

7. Piston (2) selon l'une quelconque des revendications 1 à 6,
**caractérisé en ce que**
le premier rayon de courbure (R₁) est supérieur ou égal à 5 mm.

8. Piston (2) selon l'une quelconque des revendications 1 à 7,
**caractérisé en ce que**
le deuxième rayon de courbure (R₂) vaut environ 1 à 1,5 mm.

9. Piston (2) selon l'une quelconque de revendications 1 à 8,
**caractérisé en ce que**
la surface de guidage d'écoulement (14) est inclinée par rapport à l'axe du piston (22) dans la région de transition (32) sous un angle (γ) compris entre 0° et environ 20°.

10. Piston (2) selon l'une quelconque des revendications 1 à 9,
**caractérisé en ce que**
la région de transition (32) s'étend sur une hauteur (b) d'au moins 0,5 mm.

11. Piston (2) selon l'une quelconque des revendications 1 à 10,
**caractérisé en ce que**
la surface de piston (4) présente dans la région d'injection (29) un dégagement d'injecteur (35), la cuvette de piston (12) se terminant de préférence dans le dégagement d'injecteur (35).

12. Piston (2) selon l'une quelconque des revendications 1 à 11,
**caractérisé en ce que**
la distance vue en plan entre la source d'allumage (9a) et la rampe (5) vaut au moins la moitié du diamètre (r) de la bougie d'allumage.

13. Piston (2) selon l'une quelconque des revendications 1 à 12,
**caractérisé en ce que**
la distance (A) entre la rampe (5) et le bord du piston (11) le plus éloigné de la région d'injection (19) sur le côté d'échappement (23) vaut entre 20 % et 40 %, de préférence entre 30 % et 40 % du diamètre du piston (D).

14. Utilisation du piston (2) selon l'une quelconque des revendications 1 à 13, dans un moteur à combustion interne avec une ou plusieurs injections directes de carburant dans le cylindre par temps de travail.
